# EUROPÄISCHE PATENTSCHRIFT

(11) **EP 1 697 600 B1**
(45) Veröffentlichungstag und Bekanntmachung des Hinweises auf die Patenterteilung: **22.10.2008**
(21) Anmeldenummer: 04818111.9
(22) Anmeldetag: 05.11.2004
(51) Int. Cl.: E04D 11/02, E04F 15/18, E04F 15/08

(54) **MEHRSCHICHTIGES ENTKOPPLUNGS-, ABDICHTUNGS- UND DRAINAGESYSTEM**
MULTI-LAYER DECOUPLING, SEALING AND DRAINAGE SYSTEM
SYSTEME MULTICOUCHE DE DESOLIDARISATION, D'ETANCHEIFICATION ET DE DRAINAGE

(30) Priorität: 06.11.2003 DE 20317247 U; 01.06.2004 DE 102004026651
(43) Veröffentlichungstag der Anmeldung: 06.09.2006
(73) Patentinhaber: Blanke Gmbh & Co. Kg, 58642 Iserlohn (DE)
(72) Erfinder: THRONICKE, Sandro, Gerd, 44532 Lünen (DE); BLANKE, Peter, Wilhelm, 58642 Iserlohn (DE)
(74) Vertreter: Schneider, Uwe
(86) Internationale Anmeldenummer: PCT/DE2004/002457
(87) Internationale Veröffentlichungsnummer: WO 2005/045152

(56) Entgegenhaltungen:
- EP-A- 0 386 324
- WO-A-00/42258
- WO-A-99/25940
- DE-C1- 10 060 751
- DE-U1- 8 814 650
- DE-U1- 20 317 247
- DE-U1- 29 622 129
- DE-U1- 29 921 970
- FR-A- 2 774 715

## Beschreibung

Die Erfindung betrifft ein mehrschichtiges Entkopplungs-, Abdichtungs- und Drainagesystem, insbesondere für die Verlegung keramischer Beläge im Dünnbettverfahren, gemäß Oberbegriff des Anspruches 1.

Keramische Beläge und insbesondere Fliesen werden heute üblicherweise im sogenannten Dünnbettverfahren verlegt, bei dem die keramischen Beläge in eine dünne Kleberschicht aus einem Fliesenmörtel verlegt werden. Dieses im Innenbereich zufriedenstellende Verfahren weist jedoch bei der Verarbeitung von keramischen Belägen im Außenbereich insofern Probleme auf, als die Feuchtigkeitsbelastung und die Temperaturbelastung derartiger Beläge nicht selten zu schleichender Zerstörung der Fliesen bzw. deren Verlegungsuntergründe führt, wodurch geringe Haltbarkeitszeiten derartiger Beläge nicht zu vermeiden sind und für die Sanierung hohe Kosten entstehen können.

Der hauptsächliche Problempunkt bei der Verarbeitung keramischer Beläge im Außenbereich besteht in der nicht vermeidbaren Feuchtigkeitsbelastung der keramischen Beläge, die sich durch Regenwasser oder auch sich niederschlagende Feuchtigkeit aufgrund unterschiedlicher Temperaturen der Umgebung ergeben. Derartige Feuchtigkeit dringt durch die keramischen Beläge und insbesondere durch die Fugen in den Unterbau der keramischen Beläge ein und kann sich dort stauen. Durch die Verarbeitung im Dünnbettverfahren ist es quasi nicht vermeidbar, daß sich unterhalb der Fliesen Hohlräume bilden, die von dem wie vorstehend beschrieben eindringenden Wasser mit der Zeit ausgefüllt werden und damit zu einer ständigen Feuchtigkeitsbelastung zum einen des keramischen Belages und zum anderen das Untergrundes führen. Durch die nicht vermeidbaren Hohlräume kann insbesondere in der kalten Jahreszeit in den Hohlräumen des Dünnbettmörtels gestautes Wasser sich ausdehnen und zu einer Ablösung der keramischen Beläge führen. Ebenfalls kann durch die Sonneneinstrahlung auf den im Außenbereich verlegten keramischen Belägen das in den Hohlräumen sich stauende Wasser hohe Wasserdampfdrücke erzeugen und etwa bei glasierten Fliesen zu Abplatzungen der Fliesen führen. Ähnliches geschieht bei Frosttemperaturen, da sich die Poren innerhalb der Fliesen durch die ständigen Feuchtigkeitsbelastungen mit Wasser füllen und bei Frost ausdehnen. Hierdurch entstehen dort derartige Abplatzungen an der keramischen Oberfläche. Weiterhin kann das Stauwasser Kalke aus dem Fugenmörtel und dem Dünnbettmörtel herauslösen, die zu Ausblühungen aus den Fugen führen können. Auch kann in den Hohlräumen unterhalb der keramischen Beläge der üblicherweise als Kunststoffmörtel verarbeitete Fliesenkleber angelöst werden und dadurch seine Festigkeit verlieren. Auch ist durch die sehr unterschiedlichen Ausdehnungskoeffizienten von Untergrund, Dünnbettmörtel und keramischem Belag durch die im Außenbereich auftretenden, sehr hohen Temperaturdifferenzen zwischen hohen Temperaturen aufgrund Sonneneinstrahlung und niedrigeren Temperaturen bei Frost das Rißverhalten des keramischen Belages und des Untergrundes schwierig zu beherrschen.

Es ist daher schon vielfach vorgeschlagen worden, derartige im Außenbereich verlegte keramische Beläge dadurch haltbarer verlegen zu können, daß das unvermeidlich von der Oberseite des keramischen Verlages eindringende Wasser gezielt aus dem Unterbau des keramischen Belages wieder abgeführt wird. Grundidee aller dieser Lösungen ist es, unterhalb des keramischen Belages gezielt Hohlräume in den Unterbau einzubringen, die allerdings nicht geschlossen sind, sondern eine Abführung der eingedrungenen Feuchtigkeit über entsprechende Kanäle und im Gefälle selbsttätig herbeizuführen. Hierdurch wird eine Bildung von Stauwasser vermieden und die unvermeidbaren Hohlräume unterhalb der keramischen Beläge gezielt belüftet. Das eindringende Wasser kann daher nur kurz innerhalb des keramischen Belages bzw. in dessen Untergrund verbleiben und damit die vorstehend genannten Schäden gar nicht erst anrichten. Weiterhin dienen derartige Unterbauten keramischer Beläge auch dazu, daß eine gezielte Entkopplung zwischen dem keramischen Belag und dem Unterbau herbeigeführt wird, da beispielsweise durch die unterschiedlichen Temperaturdehnungen bzw. Elastizitäten zwischen keramischem Belag und Untergrund häufig auch Belastungsrisse bzw. Spannungsrisse auftreten können.

Eine derartige Gestaltung eines Abdichtungs- und Drainagensystems ist aus der DE 100 60 751 C1 bekannt. Bei dieser Gestaltung wird ein Abdichtungs- und Drainagesystem vorgeschlagen, das unterseitig eine Kunststoff- oder Bitumenschicht aufweist, über der eine erste Vliesschicht aus einem ersten hydrophoben Polymer, darüber eine Drainageschicht aus einem zweiten hydrophoben Polymer und wiederum darüber eine zweite Vliesschicht aus dem ersten hydrophoben Polymer angeordnet sind. Dieser Schichtaufbau erlaubt zwar in gewissen Grenzen eine Abführung eingedrungener Feuchtigkeit aus dem Unterbau einer Fliesenschicht, doch ist die mechanische Belastbarkeit eines derartigen Schichtaufbaus nicht zufriedenstellend, da die Einbettung der obersten Vliesschicht in den Fliesenmörtel keine hinreichende Verankerungsfunktion bzw. Bewehrungsfunktion erlaubt. Die Drainageschicht ist hierbei als eine gitterartige Schicht ausgebildet, ohne dass genaue Angaben zur Ausbildung der gitterartigen Schicht gemacht werden.

Aus der EP 0 386 324 A2 ist ein bituminöser Haftvermittler bekannt, der auf einer Bitumen-Trägerschicht eine vliesartige Schicht aufkaschiert hat, auf der weiderum ein gitterartiges Gewebe als Armierungsschicht zu besseren Befestigung eines Zementmörtels für eine darauf aufzubringende Fleisenschicht aufweist.

Aus der DE 299 21 970 U1 ist eine Leichtbauplatte mit einer Armierung mittels weitmaschigem Glasgittergewebe bekannt.

Weitere Schriften aus dem weiteren technischen Umfeld der Erfindung sind durch die FR 2 774 715 A1, die DE 88 14 650 U1, die DE 203 17 247 U1, die DE 296 22 129 U1, WO 00/42258 A1 und die WO 99/25940 bekannt.

Aufgabe der vorliegenden Erfindung ist es daher, ein gattungsgemäßes mehrschichtiges Abdichtungs- und Drainagesystem derart weiterzubilden, daß neben einer Verbesserung der Drainagefunktion insbesondere auch eine Verbesserung der mechanischen Belastbarkeit und der Verankerung an der Fliesenschicht erreichbar ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung beschreibt ein mehrschichtiges Abdichtungs- und Drainagesystem, insbesondere für die Verlegung keramischer Beläge im Dünnbettverfahren, aufweisend einen Schichtaufbau, aufgeführt von unten nach oben, mit einer aus einem ersten gitterartigen Strukturelement gebildeten Drainageschicht mit zwischen Gitterstrukturen des gitterartigen Strukturelementes gebildeten Drainagebereichen, einer flüssigkeitsdurchlässigen Vliesschicht, einer aus einem zweiten gitterartigen Strukturelement gebildeten Verankerungsschicht für eine im Bereich der Oberseite des Abdichtungs- und Drainagesystems einzubringende, bei der Verarbeitung plastische und danach aushärtende Verfüllmasse sowie einer an der Verankerungsschicht zumindest abschnittsweise fest angeordneten Armierungsschicht. Ein derartiger Schichtaufbau ermöglicht eine wesentliche Verbesserung bekannter Abdichtungs-und Drainagesysteme dadurch, daß für jede Funktion wie Verankerung und Bewehrung, Verhinderung von Durchtritt von Fugenmörtel in den Drainagebereich, Drainage durchtretender Flüssigkeit und Entkopplung zum Untergrund separate Schichten vorhanden sind, die in ihrer Zusammenstellung sowie die Dimensionierung ein optimales Ergebnis erzielen. Hierbei ist insbesondere durch die oberseitig angeordnete Verankerungsschicht und die darüber aufgelegte und damit befestigte Armierungsschicht dafür gesorgt, daß ein oberseitig eingebrachter Fugenmörtel sich vollständig mit dem Abdichtungs- und Drainagesystem verbindet und dabei dafür sorgt, daß eine entsprechende Belastbarkeit des Abdichtungs- und Drainagesystems erzielt wird. Die zwischengelegte Vliesschicht, die flüssigkeitsdurchlässig ausgestaltet ist, verhindert gleichzeitig ein Eindringen der Verfüllmasse wie etwa einem Fliesenkleber in den Drainagebereich und sorgt dafür, daß die Drainagekanäle zurAbführung der durch die Vliesschicht durchtretenden Flüssigkeit auf jeden Fall offen bleiben. Die gitterartigen Strukturelemente erlauben hierbei einen besonders einfachen Aufbau der im wesentlichen die Dicke des Abdichtungs- und Drainagesystems bestimmenden Schichten Verankerungsschicht und Drainageschicht.

In vorteilhafter Ausgestaltung kann das erste gitterartige Strukturelement und das zweite gitterartige Strukturelement einen gleichen Aufbau aufweisen. Hierdurch kann die Herstellung des Abdichtungs- und Drainagesystems besonders einfach erfolgen.

Weiterhin kann vorgesehen werden, daß das gitterartige Strukturelement aus stabförmig gitterartig zueinander angeordneten und aneinander an den Kreuzungspunkten des Gitters festgelegten Einzelstäben gebildet ist. Ein derartiges gitterartiges Strukturelement läßt sich einfach aus gleichartig vorfertigbaren Einzelstäben herstellen und man kann daher etwa kostengünstig extrudierte Einzelstäbe verarbeiten, die auf Trommeln aufgewickelt und für das Herstellen der gitterartigen Strukturelemente jeweils zueinander positioniert werden. Damit ist die Herstellung eines solchen gitterartigen Strukturelementes sehr kostengünstig und einfach. Anders als bei bekannten Abdichtungs- und Drainagesystemen müssen keine aufwendigen Werkzeuge gefertigt werden, die zueinander abgewinkelte oder sonstwie verformte Bereiche eine Drainageschicht herstellen. Hierbei kann in weiterer Ausgestaltung dafür gesorgt werden, daß die Einzelstäbe des gitterartigen Strukturelementes eine im wesentlichen rechteckige Querschnittsform aufweisen. Insbesondere wenn die Einzelstäbe ungleichförmige Abmessungen ihrer Kanten aufweisen, läßt sich die Dicke der gitterartigen Strukturelemente einfach verändern und an unterschiedliche Bedürfnisse anpassen.

Von besonderem Vorteil ist es, wenn die sich kreuzenden Einzelstäbe des gitterartigen Strukturelementes so angeordnet sind, daß eine erste Schicht aus jeweils gleich orientierten Einzelstäben unterhalb einer zweiten Schicht aus dazu in einem Winkel angeordneten, jeweils zueinander gleich orientierten Einzelstäben besteht. Somit entfällt bei der Herstellung des gitterartigen Strukturelementes die Notwendigkeit, die Einzelstäbe wie bei textilen Geweben jeweils zueinander zu verschränken, was die Herstellung weiter vereinfacht und zum anderen dafür sorgt, daß die gleichartigen Schichten der unteren und der oberen Lage der Einzelstäbe zwischen sich jeweils entsprechende Freiräume bilden, die für die Drainage genutzt werden können.

Es ist weiterhin denkbar, daß die gitterartige Struktur aus den Einzelstäben eine Rauten-, Rechteck- oder Quadratform aufweist. Durch derartige Formen ist dafür gesorgt, daß bei einer Verarbeitung des Abdichtungs- und Drainagesystems am Einbauort die sich bildenden Drainagekanäle immer so angeordnet werden können, daß die Abfuhr von in die Drainageschicht eintretenden Wassers etwa durch das Gefälle an dem Verlegeort hinreichend gewährleistet ist.

Eine weitere Vereinfachung der Herstellung der Drainageschicht läßt sich erreichen, wenn die Einzelstäbe der beiden Schichten miteinander im Kreuzungsbereich unter mechanischem Druck verschweißt sind. Etwa kann durch Aufheizen der durch Temperatureinfluß plastisch verformbaren Einzelstäbe dafür gesorgt werden, daß im Berührungsbereich der Einzelstäbe eine Erweichung und ein Verschweißen mit dem jeweils darunter liegenden Einzelstab erfolgt und sich damit ein mattenartiger Verbund der Einzelstäbe ergibt.

Weiterhin ist es denkbar, daß etwa bei einem Verschweißen der Einzelstäbe die Einzelstäbe des gitterartigen Strukturelementes zu mindestens an den Kreuzungspunkten zueinander verkippte Kantenbereiche aufweisen, wodurch sich hinterschnittene Abschnitte an den Einzelstäben bilden. Durch das plastische Umformen der Einzelstäbe im Bereich der Kreuzungspunkte durch Temperatureinfluß kommt es dazu, daß die Einzelstäbe durch den mechanischen Druck ein wenig verformt werden und dadurch ihre Ausrichtung abhängig von der Lage des mit dem Einzelstab zu verbindenden anderen Einzelstabes verändern. Dies führt dazu, daß sich Hinterschneidungen bilden, die etwa für die Verankerung in der Verfüllmasse von besonderem Vorteil sind. Die Verfüllmasse dringt aufgrund ihrer Plastizität bei der Verarbeitung in diese Hinterschneidungsbereiche ein und kann nach dem Aushärten sich wesentlich besser an der Verankerungsschicht durch die Hinterschnitte der Einzelstäbe festhalten.

Weiterhin ist es in anderer Ausgestaltung denkbar, daß die Armierungsschicht auf der Verankerungsschicht aufgeschweißt oder auch aufgeklebt ist. Hierdurch kann die Armierungsschicht zum einen gut in die Verfüllmasse eingebettet werden, zum anderen hängt sie fest an der Verankerungsschicht, die ebenfalls mit der Verfüllmasse ausgefüllt wird. Damit ergibt sich ein besonders guter Verbund zwischen der Verfüllmasse und der Armierungsschicht bzw. der Verankerungsschicht. Es ist hierbei denkbar, daß die Armierungsschicht als ein gitterartiges Gewebe gebildet ist, vorzugsweise als ein Glasfasergewebe, das zur sicheren Verankerung mit der oberseitig des Abdichtungs- und Drainagesystems einzubringenden Verfüllmasse dient.

Von Vorteil für die Verarbeitung größerer Flächen des Abdichtungs- und Drainagesystems ist es, wenn die Armierungsschicht sich zu mindestens in einzelnen Randbereichen des Abdichtungs- und Drainagesystems über die anderen Schichten hinaus erstreckt, um einen Übergang zu anderen Abschnitten des Abdichtungs- und Drainagesystems zu schaffen. Hierdurch kann ein entsprechend überlappter Anschluß an den Rändern etwa einzeln verarbeitbarer Bahnen erreicht werden, der keinerlei Festigkeitsverlust an den Übergangsbereichen zwischen benachbarten Bahnen mit sich bringt.

Weiterhin ist es denkbar, daß das Abdichtungs- und Drainagesystem lose auf einem Untergrund verlegbar ist. Hierdurch wird eine vollständige Entkopplung etwa eines aufgebrachten Fliesenbelages vom jeweiligen Untergrund erreicht, der etwa bei stark unterschiedlichen Temperatur-Ausdehnungskoeffizienten oder arbeitenden Untergründen wie etwa Holzböden notwendig ist.

In einer anderen Ausgestaltung ist es denkbar, daß das Abdichtungs- und Drainagesystem fest, vorzugsweise verklebt auf einem Untergrund verlegbar ist. Hierdurch wird eine sichere Befestigung des Abdichtungs- und Drainagesystems erreicht, wenn dies durch die Eigenschaften des Untergrundes zulässig und sinnvoll ist.

Weiterhin ist in einer anderen Ausgestaltung denkbar, daß unterseitig der unteren Drainageschicht eine Abdichtungsschicht an der Drainageschicht angeordnet ist, die feuchtigkeitsundurchlässig ausgebildet ist. Hierdurch kann erreicht werden, daß gleichzeitig mit der Verlegung des Abdichtungs- und Drainagesystems eine zusätzliche oder auch einfache Abdichtung des Untergrundes erreicht werden kann, die sonst nur durch zusätzlich separat aufzubringende Dichtungsschichten erzielt werden kann. Damit kann durch die Aufbringung des erfindungsgemäßen Abdichtungs-und Drainagesystems der Untergrund auch dann unbehandelt bleiben, wenn besondere Dichtungseigenschaften gefordert oder bauseits nicht vorhanden sind.

Denkbar ist in einer weiteren Ausgestaltung, daß die Abdichtungsschicht mit angrenzenden Abdichtungsschichten anderer Abschnitte des Abdichtungs- und Drainagesystems selbstklebend verklebbar ist. Hierdurch können auch größere Flächen abzudichtender Untergründe sicher und einfach in einem Arbeitsgang abgedichtet werden, ohne daß die Abmessungen etwa rollenartig vorkonfektionierter Einheiten des Abdichtungs- und Drainagesystems hier Einschränkungen mit sich bringen würden. Eine denkbare Ausgestaltung einer solchen verklebbaren Abdichtungsschicht kann darin gesehen werden, wenn die selbstklebende Abdichtungsschicht aus einer Bitumen-Kaltselbstklebebahn gebildet ist. Derartige Bitumen-Kaltselbstklebebahnen sind handelsüblich und sollen daher hier nicht weiter erörtert werden. Auch ist es denkbar, daß die Abdichtungsschicht aus einer Polymer-Abdichtungsschicht, insbesondere aus einer Polyethylen-Abdichtungsschicht gebildet ist. Auch solche Polymer-Abdichtungsschichten sind in vergleichbarer Ausgestaltung grundsätzlich bekannt. Von Vorteil für die Abdichtung auch größerer Flächen ist es dabei, wenn die Abdichtungsschicht aus der Polymer-Abdichtungsschicht sich zu mindestens in einzelnen Randbereichen des Abdichtungs- und Drainagesystems über die anderen Schichten hinaus erstreckt, um einen feuchtigkeitsundurchlässigen Übergangsbereich zu anderen Abschnitten des Abdichtungs- und Drainagesystems zu schaffen. Damit kann ebenfalls im Bereich der Überlappung ein feuchtigkeitsdichter Anschluß an benachbart verlegte Bahnen erreicht werden.

Hinsichtlich der Abmessungen der einzelnen Schichten des Abdichtungs- und Drainagesystems ist es denkbar, daß die Dicke der Drainageschicht zwischen 2 und 6 Millimetern, die Dicke der Verankerungsschicht zwischen 2 und 6 Millimetern und damit in einer Ausgestaltung die Gesamtdicke des Abdichtungs- und Drainagesystems im wesentlichen zwischen 4 und 12 Millimetern beträgt. Hierdurch trägt das Abdichtungs- und Drainagesystem nicht wesentlich relativ zu einem vorgegebenen Untergrund auf und kann auch bei räumlichen knappen Einbauverhältnissen unproblematisch eingesetzt werden.

Von Vorteil für die Drainagewirkung ist es, wenn die flüssigkeitsdurchlässige Vliesschicht einen kleinen Durchflußwiderstand gegenüber Durchtritt von Flüssigkeit aufweist, gleichzeitig aber ein Durchtreten der plastisch in die Verankerungsschicht eingebrachten, relativ zähen Verfüllmasse in.die Drainageschicht verhindert. Hierdurch kann eine gute Durchleitung der Flüssigkeit durch die Vliesschicht erreicht werden, ohne daß die Gefahr besteht, daß bei der Verarbeitung der Verfüllmasse diese in die Drainagebereiche eindringen und diese verstopfen kann.

Es ist von wesentlichem Vorteil für die Benutzungseigenschaften des erfindungsgemäßen Abdichtungs- und Drainagesystems, wenn die Verankerungsschicht nach dem Einbringen der Verfüllmasse im wesentlichen vollständig mit der Verfüllmasse ausgefüllt ist und die in die ausgehärtete Verfüllmasse eingebettete Armierungsschicht eine Versteifungs- und Bewehrungsfunktion für die Abtragung von oberhalb eingeleiteter mechanischer Belastungen erfüllt. Damit wird die Lastabtragung über wesentlich größere Schichtdicken als bei bekannten Abdichtungs- und Drainagesystemen möglich, da zusätzlich noch die ganze Schichtdicke der Verankerungsschicht bei mechanischen Belastungen mitträgt und gleichzeitig durch die Armierungsschicht verstärkt ist.

Es ist in einer weiteren Ausgestaltung denkbar, daß unterhalb der Drainageschicht eine Dämmschicht, insbesondere eine Dämmschicht zum Schallschutz und insbesondere zum Trittschallschutz angeordnet ist. Eine derartige Dämmschicht, die beispielsweise aus einer Polymerschicht, insbesondere aus einer Polyethylenschicht, oder auch aus einer Bitumenschicht oder sonstigen zur Schalldämmung geeigneten Materialien gebildet sein kann, ermöglicht eine auch schallmäßige Entkopplung beispielsweise einen keramischen Belages von dem Untergrund, wodurch etwa an dem keramischen Belag eingebrachte Trittschallgeräusche durch die Dämmschicht noch weiter vermindert und damit wesentlich verringert auf den Untergrund übertragen werden können.

Eine besonders bevorzugte Ausführungsform des erfindungsgemäßen Entkopplungs-, Abdichtungs- und Drainagesystems zeigt die Zeichnung.

Es zeigen:
Figur 1 - einen Schnitt durch ein erfindungsgemäßes Entkopplungs-, Abdichtungs- und Drainagesystem zur Erläuterung des Schichtaufbaus,
Figur 2 - eine Draufsicht auf ein erfindungsgemäßes Entkopplungs-, Abdichtungs- und Drainagesystem gemäß Figur 1,
Figur 3 - Anordnung von Überlappungsbereichen für Armierungsschicht und Abdichtungsschicht an einem erfindungsgemäßes Entkopplungs-, Abdichtungs- und Drainagesystem gemäß Figur 1.

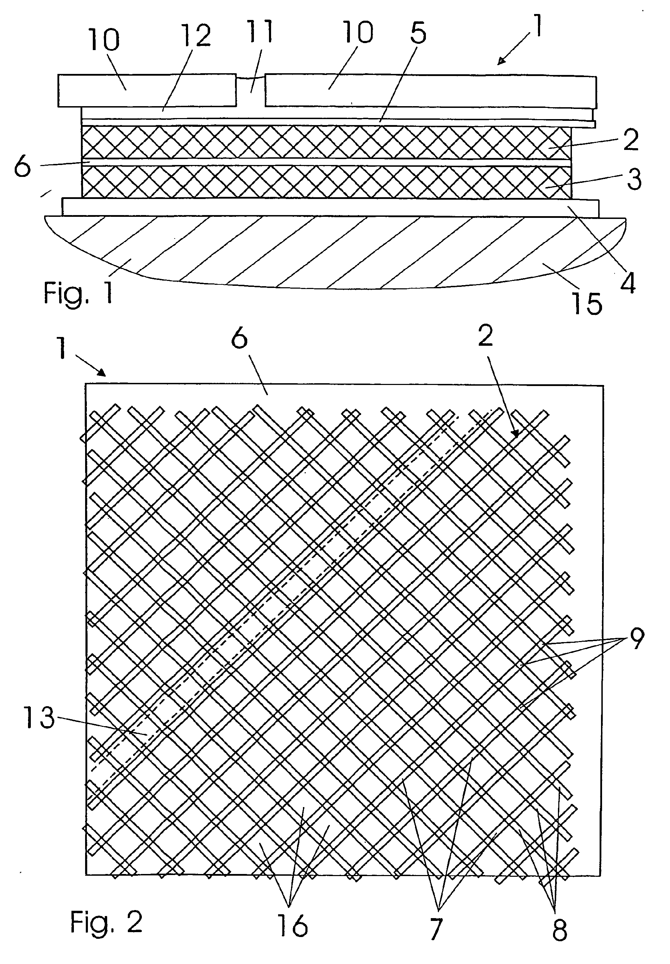

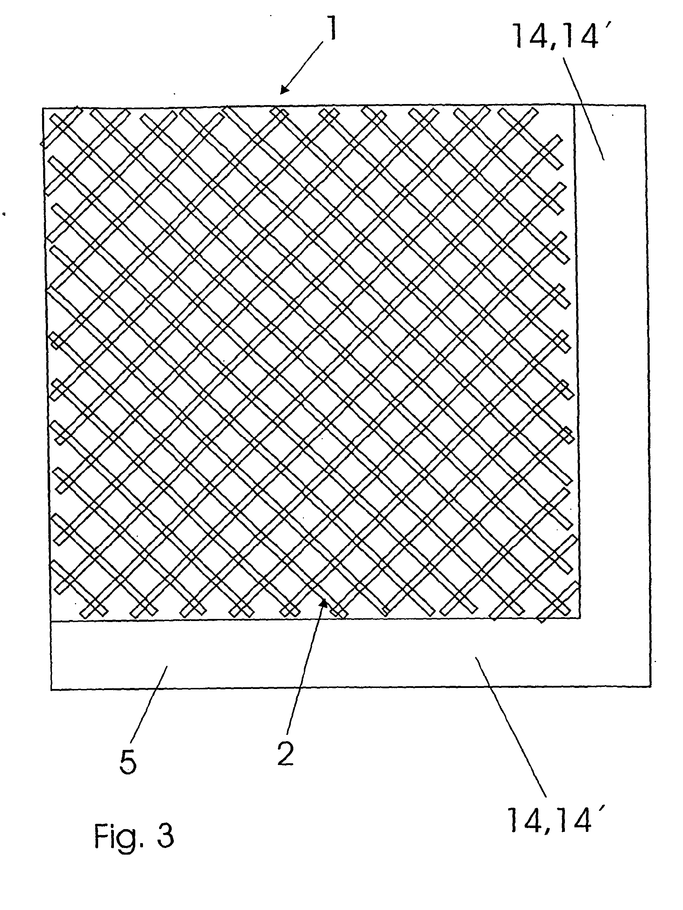

In der Figur 1 ist in einer geschnittenen Seitenansicht der Schichtaufbau eines erfindungsgemäßen mehrschichtigen Entkopplungs-, Abdichtungs- und Drainagesystems 1 aufgezeigt, wobei in der Figur 2 eine geschnittene Draufsicht etwa in Höhe einer Vliesschicht 6 zu erkennen ist und in der Figur 3 eine Draufsicht auf das Entkopplungs-, Abdichtungs- und Drainagesystem 1 geschnitten entlang der Armierungsschicht 5 dargestellt ist. Das Entkopplungs-, Abdichtungs- und Drainagesystems 1 ist in der Figur 1 im Einbauzustand auf einem Untergrund 15, etwa einem Zementestrich oder dergleichen dargestellt, wobei oberhalb des Entkopplungs-, Abdichtungs- und Drainagesystems 1 ein Fliesenbelag aus Fliesen 10 zu erkennen ist, der im Dünnbettverfahren in einem Fliesenmörtel 12 verlegt ist, wobei die Fugen 11 zwischen den einzelnen Fliesen 10 ebenfalls mit dem Fliesenmörtel 12 ausgefüllt sind.

Das erfindungsgemäße Entkopplungs-, Abdichtungs- und Drainagesystem 1 besteht dabei aus einer auf dem Untergrund 15 aufliegenden Abdichtungsschicht 4, die beispielsweise aus einem Bitumen oder einen Polyethylen gebildet ist und als Bahn bestimmter Breite verlegt werden kann. Die Abdichtungsschicht 4 kann dabei mit dem Untergrund 15 verklebt sein, ebenfalls ist es denkbar, zur Entkopplung von Untergrund 15 und Fliesenbelag aus den Fliesen 10 die Abdichtungsschicht 4 auf dem Untergrund 15 nur schwimmend aufzulegen. Derartige Verlegeverfahren sind grundsätzlich bekannt und sollen daher hier nicht weiter behandelt werden.

Oberhalb dieser Abdichtungsschicht 4 ist eine Drainageschicht 3 aus einer noch später erläuterten gitterartigen Struktur mit der Abdichtungsschicht 4 verbunden, über der wiederum eine flüssigkeitsdurchlässige Vliesschicht 6 angeordnet und mit der Drainageschicht 3 verbunden ist. Die Verbindung kann beispielsweise durch Verkleben oder Verschweißen in grundsätzlich bekannter Weise abhängig von den verwendeten Materialien erfolgen.

Oberhalb der Vliesschicht 6 ist eine mit der Vliesschicht 6 verbundene Verankerungsschicht 2 zu erkennen, die ebenfalls eine gitterartige Struktur ähnlich wie die Abdichtungsschicht 4 aufweist. Diese Verankerungsschicht 2 ebenso wie die mit ihr verbundene und oberhalb angeordnete Armierungsschicht 5 dient zur Verankerung des Abdichtungs- und Drainagesystems 1 an dem Fliesenmörtel 12 und damit der Schicht aus den Fliesen 10. Die Armierungsschicht 5 kann beispielsweise in grundsätzlich bekannter Weise aus einem gitterartig angeordneten Glasfasergewebe bestehen, das entsprechende Öffnungen und freie Bereiche aufweist, damit der Fliesenmörtel 12 möglichst tief in die Verankerungsschicht 2 eintreten kann. Die Verankerungsschicht 2 weist dabei in noch näher beschriebener Weise Aufnahmeräume 16 für den Fliesenmörtel 12 auf und dient damit zur Verbesserung der Verankerung des Fliesenmörtels 12 an dem mehrschichtigen Abdichtungs- und Drainagesystem 1.

Die Festlegung der Fliesenschicht aus den Fliesen 10 erfolgt hierbei dadurch, daß der Fliesenmörtel 12 vor dem Auflegen der Fliesen 10 oberseitig auf die Armierungsschicht 5 aufgebracht und mit einer Kelle möglichst tief durch die Öffnungen der Armierungsschicht 5 in die Verankerungsschicht 2 hinein gedrückt wird. Der im plastischen Zustand verarbeitete Fliesenmörtel 12 füllt hierbei die Aufnahmeräume 16 in der Verankerungsschicht 2 weitgehend aus und umfließt dabei die in noch näher beschriebener Weise gebildeten Einzelstäbe 7, 8 der Verankerungsschicht 2 nahezu vollständig. Nach dem Aushärten des Fliesenmörtels 12 hat sich ein sehr fester Verband zwischen der Verankerungsschicht 2, der Armierungsschicht 5 und dem Fliesenmörtel 12 gebildet, der zum einen die Fliesen 10 fest an dem Abdichtungs- und Drainagesystem 1 verankert und zum anderen eine stabile, plattenartigen Ausgestaltung der Verankerungsschicht 2 hervorruft. Dadurch ist das Abdichtungs- und Drainagesystem 1 besonders gut belastbar durch oberseitig der Fliesen 10 aufgebrachte mechanische Belastungen.

Der Fliesenmörtel 12, der in die Aufnahmeräume 16 der Verankerungsschicht 2 eindringt, wird durch die Vliesschicht 6 an einem weiteren Eindringen in die darunter angeordnete Drainageschicht 3 gehindert, da die Vliesschicht 6 eine gleichmäßige, gewebeartige Gestaltung aufweist, die den relativ zähen Fliesenmörtel 12 nicht passieren läßt. Gleichwohl ist die Vliesschicht 6 flüssigkeitsdurchlässig ausgestaltet, so daß von oberseitig der Fliesenschicht aus den Fliesen 10 in das Abdichtungs- und Drainagesystem 1 eindringende Feuchtigkeit in Form von Oberflächenwasser durch die Vliesschicht 6 in die Drainageschicht 3 passieren kann. Die Feuchtigkeit kann dadurch in das Abdichtungs- und Drainagesystem 1 eindringen, daß etwa über die Fugen 11 oder auch durch schmale Risse im Fugenmörtel 12 in den Fugen 11 oder auch in den Fliesen 10 eindringende Feuchtigkeit eintritt. Ebenfalls ist es denkbar, daß durch Diffusionsvorgänge derartige Feuchtigkeit unter die Fliesen 10 eindringen kann. Diese Feuchtigkeit kann in herkömmlich aufgebauten Abdichtungssystemen nicht entweichen und führt zu Schäden an den Fliesen 10 bzw. an dem Untergrund 15. Bei der hier vorgestellten Konstruktion kann dieses Oberflächenwasser durch die Verankerungsschicht 2 und durch die Vliesschicht 6 hindurch passieren und in die Drainageschicht 3 eintreten, die durch die gitterartige Struktur Drainagekanäle 13 aufweist, die mit der Umgebung in offenem Kontakt stehen und durch die die Feuchtigkeit wieder abfließen bzw. verdunsten kann. Hierdurch kann es nicht zu stehendem Wasser unterhalb der Fliesenschicht aus den Fliesen 10 kommen, so das entsprechende Schäden gar nicht erst auftreten können.

Die gitterartige Struktur der Drainageschicht 3 und ebenfalls der Verankerungsschicht 2 wird hierbei aus unter einem Winkel zueinander angeordneten Einzelstäben 7, 8 gebildet, die übereinander angeordnet eine zweilagige Schichtanordnung bilden. Die Einzelstäbe 7, 8 weisen jeweils einen etwa rechteckigen Querschnitt auf und sind an den Kreuzungspunkten 9 etwa durch thermische Verfahren miteinander verschweißt. Hierdurch bildet sich auf einfachste Weise eine Übereinanderordnung von etwa parallelen Scharen der Einzelstäbe 7, die mit ebenfalls parallelen Scharen der Einzelstäbe 8, die unter einem Winkel zu der Schar der Einzelstäbe 7 liegen, verbunden sind. Zwischen den Einzelstäben 7 bzw. 8 bilden sich durchgängige Drainagekanäle 13 in der Drainageschicht 3, die ein direktes Abfließen durchtretender Flüssigkeit und gleichzeitig eine Belüftung der Verankerungsschicht 2 von unten sowie des Untergrundes 15 von oben ermöglichen. Hierdurch kann sich ein Stauwasser unterhalb der Fliesenschicht aus den Fliesen 10 gar nicht erst bilden. In der Verankerungsschicht wird zwischen den Einzelstäben 7, 8 jeweils ein Aufnahmeraum für den Fliesenmörtel 12 gebildet, der ebenso wie die Drainagekanäle 13 durchgängig gestaltet ist.

In der Verankerungsschicht 2 hat die gitterartige Struktur aus den Einzelstäben 7, 8 weiterhin den Vorteil, daß im Bereich der Kreuzungspunkte 9 beim Verschweißen der Einzelstäbe 7, 8 sich Bereiche an den Einzelstäben 7, 8 bilden, die Hinterschnitte aufweisen und daher zu einer sehr starken Verklammerung des in diese Bereiche eintretenden Fliesenmörtels 12 mit den Einzelstäben 7, 8 nach dem Erhärten führen.

Wenn größere Flächen verarbeitet werden sollen, empfiehlt es sich, sowohl die Armierungsschicht 5 als auch die Abdichtungsschicht 4 in Überlappungsbereichen 14, 14' soweit über die Berandung der gitterartigen Drainageschicht 3 und der gitterartigen Verankerungsschicht 2 hinüber ragen zu lassen, daß sie mit benachbart anzuordnenden entsprechenden Schichten überlappend etwa verklebt oder sonstwie an diesen dicht befestigt werden können.

Es versteht sich von selbst, daß die in den Figuren 2 und 3 aufgezeigte Anordnung der Einzelstäbe 7, 8 nur beispielhaft anzusehen ist und sich jegliche Art von geometrischen Mustern aus solchen Einzelstäben 7, 8 bilden lassen, die von Vorteil für die Eigenschaften des hier genannten Abdichtungs- und Drainagesystems ist.

### Sachnummernliste

- 1: - Abdichtungs- und Drainagesystem
- 2: - Verankerungsschicht
- 3: - Drainageschicht
- 4: - Abdichtungsschicht
- 5: - Armierungsschicht
- 6: - Vliesschicht
- 7: - Einzelstab
- 8: - Einzelstab
- 9: - Kreuzungsbereich
- 10: - Fliese
- 11: - Fuge
- 12: - Fliesenmörtel
- 13: - Drainagekanal
- 14: - Überlappungsbereich
- 15: - Untergrund
- 16: - Aufnahmeräume

## Patentansprüche

1. Mehrschichtiges Entkopplungs-, Abdichtungs- und Drainagesystem (1), insbesondere für die Verlegung keramischer Beläge (10) im Dünnbettverfahren (12), aufweisend einen Schichtaufbau, aufgeführt von unten nach oben, mit
einer aus einem ersten gitterartigen Strukturelement gebildeten Drainageschicht (3) mit zwischen Gitterstrukturen des gitterartigen Strukturelementes gebildeten Drainagebereichen (13), und
einer flüssigkeitsdurchlässigen Vliesschicht (6),
**dadurch gekennzeichnet, daß**
auf der flüssigkeitsdurchlässigen Vliesschicht (6) eine aus einem zweiten gitterartigen Strukturelement gebildeten Verankerungsschicht (2) für eine im Bereich der Oberseite des Abdichtungs- und Drainagesystems (1) einzubringende, bei der Verarbeitung plastische und danach aushärtende Verfüllmasse (12) und darauf eine an der Verankerungsschicht (2) zumindest abschnittsweise fest angeordneten Armierungsschicht (5) angeordnet ist.

2. Entkopplungs-, Abdichtungs- und Drainagesystem (1) gemäß Anspruch 1, **dadurch gekennzeichnet, daß** das erste gitterartige Strukturelement (3) und das zweite gitterartige Strukturelement (2) einen gleichen Aufbau aufweisen.

3. Entkopplungs-, Abdichtungs- und Drainagesystem (1) gemäß einem der Ansprüche 1 oder 2, **dadurch gekennzeichnet, daß** ein oder beide gitterartigen Strukturelemente (2, 3) aus stabförmig gitterartig zueinander angeordneten und aneinander an den Kreuzungspunkten (9) des Gitters festgelegten Einzelstäben (7, 8) gebildet ist/gebildet sind.

4. Entkopplungs-, Abdichtungs- und Drainagesystem (1) gemäß Anspruch 3, **dadurch gekennzeichnet, daß** die Einzelstäbe (7, 8) des einen oder beider gitterartigen Strukturelemente (2, 3) eine im wesentlichen rechteckige Querschnittsform aufweisen.

5. Entkopplungs-, Abdichtungs- und Drainagesystem (1) gemäß einem der Ansprüche 3 oder 4, **dadurch gekennzeichnet, daß** die sich kreuzenden Einzelstäbe (7, 8) des einen oder beider gitterartigen Strukturelemente (2, 3) so angeordnet sind, daß eine erste Schicht aus jeweils gleich orientierten Einzelstäben (7) unterhalb einer zweiten Schicht aus dazu in einem Winkel angeordneten, jeweils zueinander gleich orientierten Einzelstäben (8) besteht.

6. Entkopplungs-, Abdichtungs- und Drainagesystem (1) gemäß einem der Ansprüche 3 bis 5, **dadurch gekennzeichnet, daß** die gitterartige Struktur aus den Einzelstäben (7, 8) eine Rauten-, Rechteck- oder Quadratform aufweist.

7. Entkopplungs-, Abdichtungs- und Drainagesystem (1) gemäß einem der Ansprüche 5 oder 6, **dadurch gekennzeichnet, daß** die Einzelstäbe (7, 8) der beiden Schichten miteinander im Kreuzungsbereich (9) unter mechanischem Druck verschweißt sind.

8. Entkopplungs-, Abdichtungs- und Drainagesystem (1) gemäß einem der Ansprüche 3 bis 7, **dadurch gekennzeichnet, daß** die Einzelstäbe (7, 8) des einen oder beider gitterartigen Strukturelemente (2, 3) zu mindestens an den Kreuzungspunkten (9) zueinander verkippte Kantenbereiche aufweisen, wodurch sich hinterschnittene Abschnitte an den Einzelstäben (7, 8) bilden.

9. Entkopplungs-, Abdichtungs- und Drainagesystem (1) gemäß einem der Ansprüche 5 bis 8, **dadurch gekennzeichnet, daß** zwischen jeweils der ersten und der zweiten Schicht aus Einzelstäben (7, 8) freie kanalartige Bereiche (13) zur Entwässerung von in das Abdichtungs- und Drainagesystem (1) eingedrungener Flüssigkeit gebildet sind.

10. Entkopplungs-, Abdichtungs- und Drainagesystem (1) gemäß Anspruch 9, **dadurch gekennzeichnet, daß** die Kanalbereiche (13) durch die Anordnung der gitterartigen Struktur im Verlegezustand des Abdichtungs- und Drainagesystems (1) so angeordnet sind, daß vorzugsweise durch Gefälle eine selbständige Abführung in das Abdichtungs- und Drainagesystem (1) eingedrungener Flüssigkeit erfolgt.

11. Entkopplungs-, Abdichtungs- und Drainagesystem (1) gemäß einem der vorstehenden Ansprüche, **dadurch gekennzeichnet, daß** die Armierungsschicht (5) auf der Verankerungsschicht (2) aufgeschweißt ist.

12. Entkopplungs-, Abdichtungs- und Drainagesystem (1) gemäß einem der Ansprüche 1 bis 10, **dadurch gekennzeichnet, daß** die Armierungsschicht (5) auf der Verankerungsschicht (2) aufgeklebt ist.

13. Entkopplungs-, Abdichtungs- und Drainagesystem (1) gemäß einem der vorstehenden Ansprüche, **dadurch gekennzeichnet, daß** die Armierungsschicht (5) ein gitterartig gebildetes Gewebe, vorzugsweise ein Glasfasergewebe, aufweist zur sicheren Verankerung mit der oberseitig des Abdichtungs- und Drainagesystems (1) einzubringenden Verfüllmasse (12).

14. Entkopplungs-, Abdichtungs- und Drainagesystem (1) gemäß einem der vorstehenden Ansprüche, **dadurch gekennzeichnet, daß** die Armierungsschicht (5) sich zu mindestens in einzelnen Randbereichen (14) des Abdichtungs- und Drainagesystems (1) über die anderen Schichten (2, 3, 6) hinaus erstreckt, um einen Übergang zu anderen Abschnitten des Abdichtungs- und Drainagesystems (1) zu schaffen.

15. Entkopplungs-, Abdichtungs- und Drainagesystem (1) gemäß einem der vorstehenden Ansprüche, **dadurch gekennzeichnet, daß** das Abdichtungs- und Drainagesystem (1) lose auf einem Untergrund (15) verlegbar ist.

16. Entkopplungs-, Abdichtungs- und Drainagesystem (1) gemäß einem der Ansprüche 1 bis 14, **dadurch gekennzeichnet, daß** das Abdichtungs- und Drainagesystem (1) fest, vorzugsweise verklebt auf einem Untergrund (15) verlegbar ist.

17. Entkopplungs-, Abdichtungs- und Drainagesystem (1) gemäß einem der vorstehenden Ansprüche , **dadurch gekennzeichnet, daß** unterseitig der Drainageschicht (3) eine Abdichtungsschicht (4) an der Drainageschicht (3) angeordnet ist, die feuchtigkeitsundurchlässig ausgebildet.

18. Entkopplungs-, Abdichtungs- und Drainagesystem (1) gemäß Anspruch 17, **dadurch gekennzeichnet, daß** die Abdichtungsschicht (4) mit angrenzenden Abdichtungsschichten (4) anderer Abschnitte des Abdichtungs- und Drainagesystems (1) selbstklebend verklebbar ist.

19. Entkopplungs-, Abdichtungs- und Drainagesystem (1) gemäß einem der Ansprüche 17 oder 18, **dadurch gekennzeichnet, daß** die selbstklebende Abdichtungsschicht (4) aus einer Bitumen-Kaltselbstklebebahn gebildet ist.

20. Entkopplungs-, Abdichtungs- und Drainagesystem (1) gemäß einem der Ansprüche 17 oder 18, **dadurch gekennzeichnet, daß** die Abdichtungsschicht (4) aus einer Polymer-Abdichtungsschicht, insbesondere aus einer Polyethylen-Abdichtungsschicht gebildet ist.

21. Entkopplungs-, Abdichtungs- und Drainagesystem (1) gemäß Anspruch 20, **dadurch gekennzeichnet, daß** die Abdichtungsschicht (4) aus der Polymer-Abdichtungsschicht sich zu mindestens in einzelnen Randbereichen (14') des Abdichtungs- und Drainagesystems (1) über die anderen Schichten (2, 3, 5, 6) hinaus erstreckt, um einen feuchtigkeitsundurchlässigen Übergangsbereich zu anderen Abschnitten des Abdichtungs- und Drainagesystems (1) zu schaffen.

22. Entkopplungs-, Abdichtungs- und Drainagesystem (1) gemäß einem der vorstehenden Ansprüche, **dadurch gekennzeichnet, daß** die Dicke der Drainageschicht (3) zwischen 2 und 6 Millimetern beträgt.

23. Entkopplungs-, Abdichtungs- und Drainagesystem (1) gemäß einem der vorstehenden Ansprüche, **dadurch gekennzeichnet, daß** die Dicke der Verankerungsschicht (2) zwischen 2 und 6 Millimetern beträgt.

24. Entkopplungs-, Abdichtungs- und Drainagesystem (1) gemäß einem der vorstehenden Ansprüche, **dadurch gekennzeichnet, daß** die Gesamtdicke des Abdichtungs- und Drainagesystems (1) zwischen 4 und 12 Millimetern beträgt.

25. Entkopplungs-, Abdichtungs- und Drainagesystem (1) gemäß einem der vorstehenden Ansprüche, **dadurch gekennzeichnet, daß** die flüssigkeitsdurchlässige Vliesschicht (6) einen kleinen Durchflußwiderstand gegenüber Durchtritt von Flüssigkeit aufweist.

26. Entkopplungs-, Abdichtungs- und Drainagesystem (1) gemäß einem der vorstehenden Ansprüche, **dadurch gekennzeichnet, daß** die flüssigkeitsdurchlässige Vliesschicht (6) ein Durchtreten der plastisch in die Verankerungsschicht (2) eingebrachten Verfüllmasse (12) in die Drainageschicht (3) verhindert.

27. Entkopplungs-, Abdichtungs- und Drainagesystem (1) gemäß einem der vorstehenden Ansprüche, **dadurch gekennzeichnet, daß** die Verankerungsschicht (2) nach dem Einbringen der Verfüllmasse (12) im wesentlichen vollständig mit der Verfüllmasse (12) ausgefüllt ist und die in die ausgehärtete Verfüllmasse (12) eingebettete Armierungsschicht (5) eine Versteifungs- und Bewehrungsfunktion für die Abtragung von oberhalb eingeleiteter mechanischer Belastungen erfüllt.

## Claims

1. A multilayer decoupling, sealing and drainage system (1) in particular for laying ceramic paving (10) by using a thin-bed method (12), comprising a layered construction containing, from the base upwards,
a drainage layer (3) that is formed from a lattice-type structural element and comprising drainage areas (13) that are formed between the lattice structures of the lattice-type structural element,
a liquid-permeable and non-woven layer (6),
**characterized in that**
on the liquid-permeable and non-woven layer (6) there is an anchoring layer (2) that is configured from a second lattice-type structural element and used to hold a filler material (12) that is to be incorporated into the upper face of the sealing and drainage system (1), which is plastic during processing and subsequently cures, whereon a reinforcing layer (5) is placed which is fixed, at least in some sections, to the anchoring layer (2).

2. Decoupling, sealing, and drainage system (1) as defined in claim 1, **characterized in that** the first lattice-type structural element (3) and the second lattice-type structural element (2) are of identical structure.

3. Decoupling, sealing, and drainage system (1) as defined in one of the claims 1 or 2, **characterized in that** one or both of the lattice-type structural elements (2, 3) is formed from individual rods (7, 8) that are disposed to one another in the manner of a lattice and fixed to one another at the points of intersection (9) of the lattice.

4. Decoupling, sealing, and drainage system (1) as defined in claim 3, **characterized in that** the individual rods (7, 8) of the one or of both lattice-type structural elements (2, 3) are of an essentially rectangular cross section.

5. Decoupling, sealing, and drainage system (1) as defined in one of the claims 3 or 4, **characterized in that** the intersecting individual rods (7, 8) of the lattice-type structural elements (2, 3) are so arranged that a first layer consists of identically oriented individual rods (7) beneath a second layer of individual rods (8) that are disposed at an angle thereto and are in each instance oriented identically to one another.

6. Decoupling, sealing, and drainage system (1) as defined in one of the claims 3 to 5, **characterized in that** the lattice-type structure of the individual rods (7, 8) is in the form of a rhombus, a rectangle, or a square.

7. Decoupling, sealing, and drainage system (1) as defined in one of the claims 5 or 6, **characterized in that** the individual rods (7, 8) of the two layers are welded to one another at the points of intersection (9) when under mechanical pressure.

8. Decoupling, sealing, and drainage system (1) as defined in one of the claims 3 to 7, **characterized in that** the individual rods (7, 8) of one or of both lattice-type structural elements (2, 3) have slanted edge areas, at least at their points of intersection (9), thereby forming undercut sections on the individual rods (7, 8).

9. Decoupling, sealing, and drainage system (1) as defined in one of the claims 5 to 8, **characterized in that** free, channel-like areas (13) for removing liquid that penetrates the sealing and drainage system (1) are formed between the first and second layer of individual rods (7, 8).

10. Decoupling, sealing, and drainage system (1) as defined in Claim 9, **characterized in that** because of the arrangement of the lattice-type structures, when the sealing and drainage system (1) has been laid, the channel areas (13) are so arranged that fluid that has penetrated the sealing and drainage system (1) drains off independently, preferably because of a gradient.

11. Decoupling, sealing, and drainage system (1) as defined in one of the preceding claims, **characterized in that** the reinforcing layer (5) is welded onto the anchoring layer (2).

12. Decoupling, sealing, and drainage system (1) as defined in one of the claims 1 to 10, **characterized in that** the reinforcing layer (5) is cemented onto the anchoring layer (2).

13. Decoupling, sealing, and drainage system (1) as defined in one of the preceding claims, **characterized in that** the reinforcing layer (5) is in the form of a lattice-type textile, preferably a glass-fibre textile, to provide for secure anchoring with the filler material (12) that is to be incorporated on top of the sealing and drainage system (1).

14. Decoupling, sealing, and drainage system (1) as defined in one of the preceding claims, **characterized in that** the reinforcing layer (5) extends beyond the other layers (2, 3, 6) at least in individual edge areas (14) of the sealing and drainage system (1) so as to create a transition to other sections of the sealing and drainage system (1).

15. Decoupling, sealing, and drainage system (1) as defined in one of the preceding claims, **characterized in that** the sealing and drainage system (1) can be laid so as to float on a substratum (15).

16. Decoupling, sealing, and drainage system (1) as defined in one of the claims 1 to 14, **characterized in that** the sealing and drainage system (1) can be laid rigidly, preferably cemented, on a substratum (15).

17. Decoupling, sealing, and drainage system (1) as defined in one of the preceding claims, **characterized in that** below the drainage layer (3) there is a sealing layer (4) arranged on the drainage layer (3), said sealing layer (4) being impermeable to liquid.

18. Decoupling, sealing, and drainage system (1) as defined in claim 17, **characterized in that** the sealing layer (4) can be attached so as to self-adhere to adjacent sealing layers (4) of other sections of the sealing and drainage system (1).

19. Decoupling, sealing, and drainage system (1) as defined in one of the claim 17 or 18, **characterized in that** the self-adhering sealing layer (4) is a bitumen-cold self-adhering strip.

20. Decoupling, sealing, and drainage system (1) as defined in one of the claims 17 or 18, **characterized in that** the sealing layer (4) is formed from a polymer sealing layer, in particular from a polyethylene sealing layer.

21. Decoupling, sealing, and drainage system (1) as defined in claim 20, **characterized in that** the sealing layer (4) of a polymer sealing layer extends beyond the other layers (2, 3, 5, 6) of the sealing and drainage system (1), at least in individual edge areas (14') so as to create a transition area that is impermeable to liquids to other sections of the sealing and drainage system (1).

22. Decoupling, sealing, and drainage system (1) as defined in one of the preceding claims, **characterized in that** the thickness of the drainage layer (3) is between 2 and 6 mm.

23. Decoupling, sealing, and drainage system (1) as defined in one of the preceding claims, **characterized in that** the thickness of the anchoring layer (2) is between 2 and 6 mm.

24. Decoupling, sealing, and drainage system (1) as defined in one of the preceding claims, **characterized in that** the overall thickness of the sealing and drainage system (1) is between 4 and 12 mm.

25. Decoupling, sealing, and drainage system (1) as defined in one of the preceding claims, **characterized in that** the liquid permeable non-woven layer (6) exhibits very low resistance to the passage of liquid.

26. Decoupling, sealing, and drainage system (1) as defined in one of the preceding claims, **characterized in that** the liquid-permeable non-woven layer (6) prevents the filler material (12), which is incorporated into the anchoring layer (2) when plastic, from penetrating into the drainage layer (3).

27. Decoupling, sealing, and drainage system (1) as defined in one of the preceding claims, **characterized in that** after the incorporation of the filler material (12), the anchoring layer (2) is essentially completely filled with the filler material (12) and the reinforcing layer (5) that is embedded in the hardened filler material (12) performs a stiffening and reinforcing function with respect to mechanical loads applied from above.

## Revendications

1. Système multicouche de désolidarisation, d'étanchéification et de drainage (1), en particulier pour la pose de revêtements (10) céramique dans le procédé à lit mince (12), comprenant une construction des couches, mentionné de bas en haut avec
une couche de drainage (3), formée d'un élément de structure de type grille, avec des zones de drainage (13), formées entre des structures de type grille d'élément de structure de type grille, et
une couche non-tissé (6) perméable au liquide,
**caractérisé en ce que**
sur la couche non-tissé (6) perméable au liquide, une couche d'ancrage (2) est arrangée, formé d'un deuxieme élément de structure de type grille, pour introduire une masse de remplissage (12) dans la zone du côté supérieur du système d'étanchéification et de drainage (1), quelle est plastique lors du traitement et durcissant ensuite, et au-dessus une couche d'armature (5) est disposée de façon fixe au moins par endroits de la couche d'ancrage (2).

2. Système de désolidarisation, d'étanchéification et de drainage (1) selon la revendication 1, **caractérisé en ce que** le premier élément de structure (3) de type grille et le deuxième élément de structure (2) de type grille présentent la même construction.

3. Système de désolidarisation, d'étanchéification et de drainage (1) selon l'une quelconque des revendications 1 ou 2, **caractérisé en ce que** le seul ou les deux éléments de structure (2, 3) de type grille sont formés de barres individuelles (7, 8), disposés à la façon d'une grille en forme de barre les unes par rapport aux autres et fixées les unes aux autres aux points de croisement (9) de la grille.

4. Système de désolidarisation, d'étanchéification et de drainage (1) selon la revendication 3, **caractérisé en ce que** les barres individuelles (7, 8) du seul ou des deux éléments de structure (2, 3) de type grille présentent une forme de section sensiblement rectangulaire.

5. Système de désolidarisation, d'étanchéification et de drainage (1) selon l'une quelconque des revendications 3 ou 4, **caractérisé en ce que** les barres individuelles (7, 8) se croisant d'un ou des deux éléments de structure (2, 3) en forme de grille, sont disposés de telle sorte qu'une première couche constituée des barres individuelles (7) orientées respectivement de façon identique au-dessous d'une seconde couche constituée de barres individuelles (8) disposées les unes par rapport aux autres en formant un angle et orientées à chaque fois dans le même sens les unes par rapport aux autres.

6. Système de désolidarisation, d'étanchéification et de drainage (1) selon l'une quelconque des revendications 3 à 5, **caractérisé en ce que** la structure en forme de grille constituée des barres individuelles (7, 8) présente une forme de losange, de rectangle ou de carré.

7. Système de désolidarisation, d'étanchéification et de drainage (1) selon l'une quelconque des revendications 5 ou 6, **caractérisé en ce que** les barres individuelles (7, 8) des deux couches sont soudées les unes avec les autres dans la zone de croisement (9) sous l'effet de pression mécanique.

8. Système de désolidarisation, d'étanchéification et de drainage (1) selon l'une quelconque des revendications 3 à 7, **caractérisé en ce que** les barres individuelles (7, 8) du seul ou des deux éléments de structure (2, 3) de type grille présentent des zones d'arête basculées les unes par rapport aux autres au moins aux points de croisement (9), de sorte que des parties contre-dépouillées se forment sur les barres individuelles (7, 8).

9. Système de désolidarisation, d'étanchéification et de drainage (1) selon l'une quelconque des revendications 5 à 8, **caractérisé en ce que** chaque fois entre la première couche et la deuxième couche des barres individuelles (7, 8) zones libres comme un conduit (13) sont formés pour le drainage d'un liquide que est pénétré dans la système d'étanchéification et de drainage (1).

10. Système de désolidarisation, d'étanchéification et de drainage (1) selon la revendication 9, **caractérisé en ce que** des zones de conduit (13) sont arrangées de cette facon par l'arrangement de la structure de type grille en façon de la pose du système d'étanchéification et de drainage (1) que liquide que est pénétré dans la système d'étanchéification et de drainage (1) est transporté par sortie indépendante préfèrement par pente.

11. Système de désolidarisation, d'étanchéification et de drainage (1) selon l'une quelconque des revendications précédentes, **caractérisé en ce que** la couche d'armature (5) est soudée sur la couche d'ancrage (2).

12. Système de désolidarisation, d'étanchéification et de drainage (1) selon l'une quelconque des revendications 1 à 10, **caractérisé en ce que** la couche d'armature (5) est collée sur la couche d'ancrage (2).

13. Système de désolidarisation, d'étanchéification et de drainage (1) selon l'une quelconque des revendications précédentes, **caractérisé en ce que** la couche d'armature (5) présente un tissu formé en forme de grille, de préférence un tissu de fibre de verre, pour l'ancrage sûr avec la masse de remplissage (12) à introduire côté supérieur du système d'étanchéification et de drainage (1).

14. Système de désolidarisation, d'étanchéification et de drainage (1) selon l'une quelconque des revendications précédentes, **caractérisé en ce que** la couche d'armature (5) s'étend au moins dans certaine zones périphériques (14) du système d'étanchéification et de drainage (1) au-delà des autres couches (2, 3, 6), afin de créer une transition avec d'autres parties du système d'étanchéification et de drainage (1).

15. Système de désolidarisation, d'étanchéification et de drainage (1) selon l'une quelconque des revendications précédentes, **caractérisé en ce que** le système d'étanchéification et de drainage (1) peut être posé de façon libre sur un substrat (15).

16. Système de désolidarisation, d'étanchéification et de drainage (1) selon l'une quelconque des revendications 1 à 14, **caractérisé en ce que** le système d'étanchéification et de drainage (1) peut être posé de façon fixe, de préférence collé sur un substrat (15).

17. Système de désolidarisation, d'étanchéification et de drainage (1) selon l'une quelconque des revendications précédentes, **caractérisé en ce que** au-dessous de la couche de drainage (3) une couche d'étanchéification (4) est formée à cela couche de drainage (3) quelle est formée imperméable au liquide.

18. Système de désolidarisation, d'étanchéification et de drainage (1) selon la revendication 17, **caractérisé en ce que** la couche d'étanchéification (4) peut être collée autocollantes sur des couches d'étanchéification (4) adjacentes des autres sections du système d'étanchéification et de drainage (1).

19. Système de désolidarisation, d'étanchéification et de drainage (1) selon l'une quelconque des revendications 17 ou 18, **caractérisé en ce que** la couche d'étanchéification (4) est formée d'une bande de bitume autocollante à froide.

20. Système de désolidarisation, d'étanchéification et de drainage (1) selon l'une quelconque des revendications 17 ou 18, **caractérisé en ce que** la couche d'étanchéification (4) est formée à base d'une couche d'étanchéification (4) polymère, en particulier d'une couche d'étanchéification à base de polyéthylène.

21. Système de désolidarisation, d'étanchéification et de drainage (1) selon la revendications 20, **caractérisé en ce que** la couche d'étanchéification (4) formée à base d'une couche d'étanchéification polymère s'étend dans certaines zones périphériques (14') du système d'étanchéification et de drainage (1) au-delà des autres couches (2, 3, 5, 6), afin de créer une zone de transition imperméable à l'humidité avec d'autres parties du système d'étanchéification et de drainage (1).

22. Système de désolidarisation, d'étanchéification et de drainage (1) selon l'une quelconque des revendications précédentes, **caractérisé en ce que** l'épaisseur de la couche de drainage (3) se situe entre 2 et 6 millimètres.

23. Système de désolidarisation, d'étanchéification et de drainage (1) selon l'une quelconque des revendications précédentes, **caractérisé en ce que** l'épaisseur de la couche d'anchrage (2) se situe entre 2 et 6 millimètres.

24. Système de désolidarisation, d'étanchéification et de drainage (1) selon l'une quelconque des revendications précédentes, **caractérisé en ce que** l'épaisseur globale du système d'étanchéification et de drainage (1) se situe entre 4 et 12 millimètres.

25. Système de désolidarisation, d'étanchéification et de drainage (1) selon l'une quelconque des revendications précédentes, **caractérisé en ce que** la couche non-tissé (6) perméable au liquide présente une petite résistance à la circulation par rapport au liquide.

26. Système de désolidarisation, d'étanchéification et de drainage (1) selon l'une quelconque des revendications précédentes, **caractérisé en ce que** la couche non-tissé (6) perméable au liquide empêche le passage de la masse de remplissage (12), quelle est plastique depuis la depose sur la couche d'armature (5), vers la couche de drainage (3)

27. Système de désolidarisation, d'étanchéification et de drainage (1) selon l'une quelconque des revendications précédentes, **caractérisé en ce que** la couche d'ancrage (2) est remplie sensiblement complètement avec la masse de remplissage (12) après l'introduction de la masse de remplissage (12) et la couche d'armature (5) enfoncée dans la masse de remplissage (12) durcie assume une fonction de rigidification et d'armature pour l'enlèvement de sollicitations mécaniques appliquées au-dessus.
